(19) Europäisches Patentamt
European Patent Office
Office européen des brevets

(11) **EP 1 995 568 A2**

(12) **EUROPEAN PATENT APPLICATION**

(43) Date of publication:
**26.11.2008 Bulletin 2008/48**

(51) Int Cl.:
**G01D 5/36** (2006.01)

(21) Application number: **08156040.1**

(22) Date of filing: **12.05.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **25.05.2007 JP 2007139109**

(71) Applicant: **Mitutoyo Corporation**
**Kawasaki-shi,**
**Kanagawa 213-8533 (JP)**

(72) Inventors:
• **Yaku, Toru**
**Kawasaki-shi**
**Kanagawa 213-8533 (JP)**
• **Ueda, Kenji**
**Kawasaki-shi**
**Kanagawa 213-8533 (JP)**

(74) Representative: **Skone James, Robert Edmund**
**Gill Jennings & Every LLP**
**Broadgate House**
**7 Eldon Street**
**London EC2M 7LH (GB)**

(54) **Reflection type encoder**

(57) A reflection type encoder includes a reflection scale 20 having an origin pattern formed thereon, a light source 42 for irradiating light to the origin pattern, and a light receiving element 50 for detecting reflection light from the origin pattern, in which the origin pattern on the reflection scale 20 is detected by the reflection light, and further includes an incoming side origin pattern 26 and an outgoing side origin pattern 28, which are formed on the reflection scale 20, a reflection slit 46 disposed at the same side as the light source 42 and the light receiving element 50 with respect to the reflection scale 20, an incoming side lens 44 that composes an incoming side telecentric optical system in which the incoming side origin pattern 26 is made to be the object plane, and an outgoing side lens 48 that composes the outgoing side telecentric optical system in which the outgoing side origin pattern 28 is made to be the image forming plane, wherein a telecentric optical system is composed of the incoming side telecentric optical system and the outgoing side telecentric optical system at both sides of the reflection slit 46. Thereby, highly accurate origin detection is carried out with a simplified configuration without lowering utilization efficiency of light using a beam splitter and without using complicated optical components such as a trapezoidal prism, etc.

Fig. 4

**Description**

The present invention relates to a reflection type encoder including a reflection scale having an origin pattern formed thereon, a light source for irradiating light onto the origin pattern, and a light receiving element for detecting reflection light from the origin pattern, wherein an origin pattern on the reflection scale is detected by reflection light, and in particular to a reflection type encoder that is preferably used for detecting an origin by means of a reflection type incremental encoder and is capable of detecting the origin at high accuracy without use of complicated optical components.

In an incremental encoder, an origin pattern is provided, and a detection position is corrected by forcibly causing the corresponding origin pattern to pass through immediately after the power is turned on.

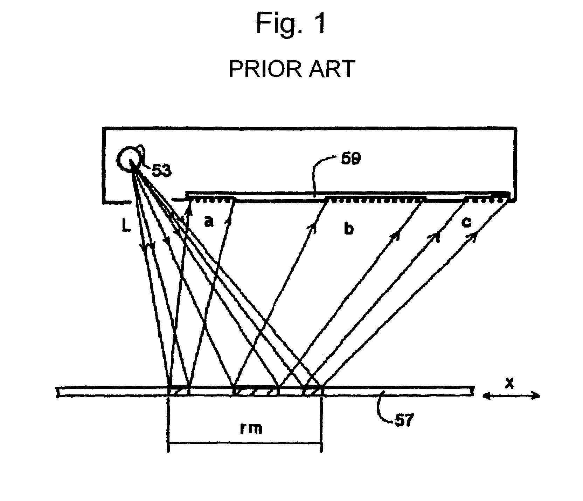

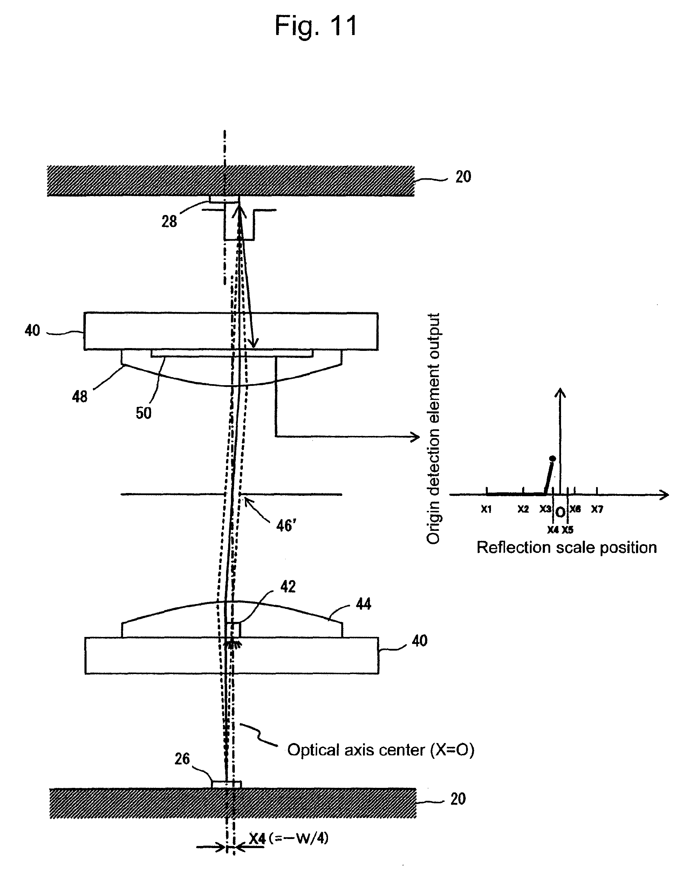

There exist a transmission type encoder and a reflection type encoder. In the reflection type encoder, a method shown in FIG. 1 that corresponds to FIG. 11 of, for example, Japanese Translation of International Application (Kohyo) No. 2004-520591 (Patent Document 1) has been proposed as a method for detecting the origin pattern (or a reference pattern) on a reflection scale by reflection light.

In this method, light L from a light source 53 is reflected by an origin pattern rm on a reflection scale 57, and produces origin pattern images a, b and c on the plane on which light receiving elements 59 of a detection portion are placed. And the light receiving elements 59 output origin signals. Herein, if the width of the origin pattern rm on the reflection scale 57 in the detection axis x direction is narrowed, the width of the origin signals can be narrowed, wherein the detection accuracy of the origin can be improved.

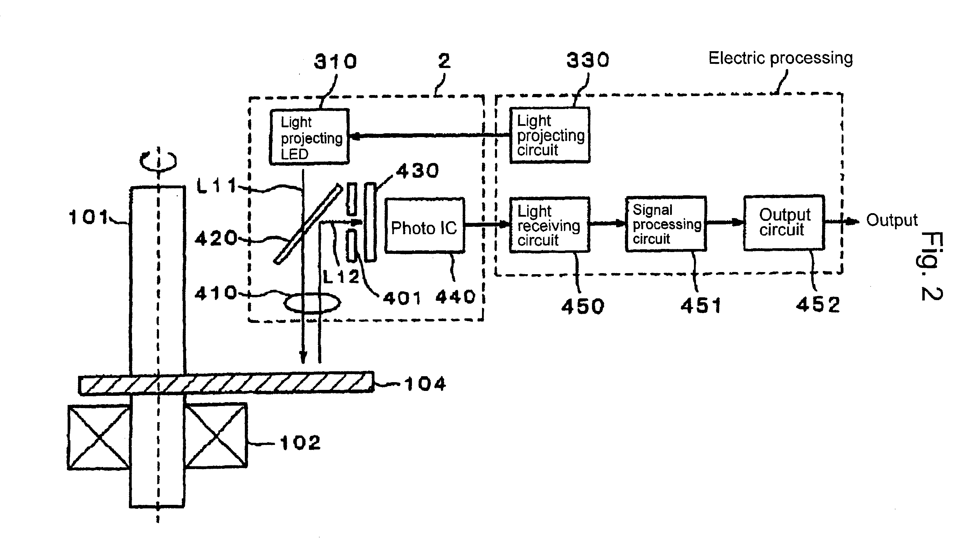

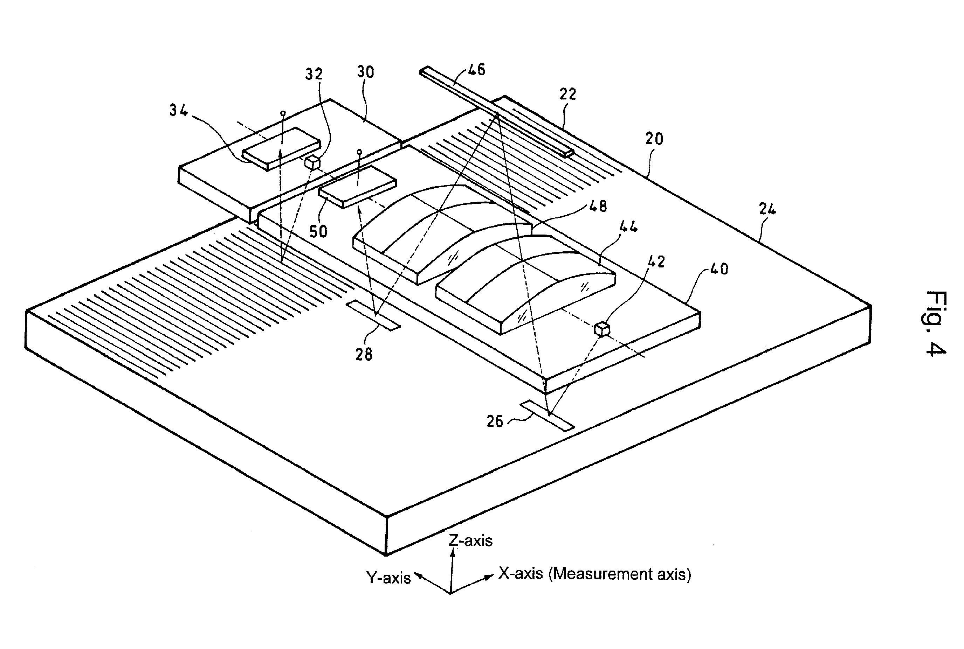

Or, as shown in FIG. 2 that corresponds to FIG. 4 of Japanese Published Unexamined Patent Application No. 2005-17023 (Patent Document 2), a method for detecting an origin pattern on the reflection scale 104 by means of an image-forming lens 410 and a detection element 440 has been proposed. In FIG. 2, reference numeral 2 denotes an optical reader, 101 denotes a shaft, 102 denotes its bearing, 310 denotes a light projecting LED, 330 denotes a light projecting circuit, 410 denotes a pin hole, 420 denotes a half mirror, 430 denotes a light shielding plate, 440 denotes a photo IC, 450 denotes a light receiving circuit, 451 denotes a signal processing portion, and 452 denotes an output circuit.

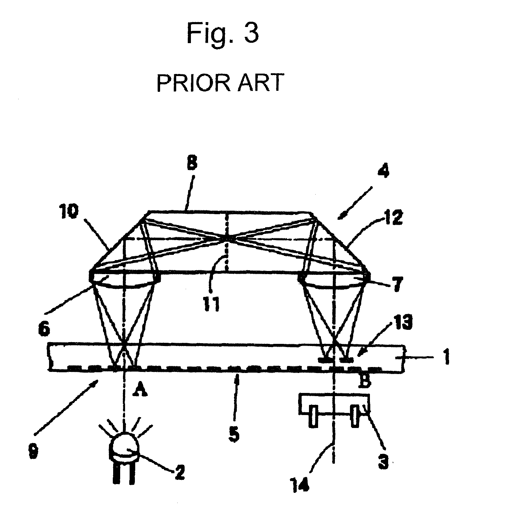

Or, as shown in FIG.3 corresponding to FIG.2 of Japanese Published Unexamined Patent Application No. Hei-8-184465 (Patent Document 3), such a method has been proposed, in which light receiving and emitting elements (light source 2 and light receiving element 3) and a turn-down optical system (trapezoidal prism 8) are disposed with a transmission scale (moving plate 1) placed therebetween, a slit image at the light source 2 side is once transformed to an intermediate image on a focusing plane 11 in the optical component 8, and the intermediate image is projected onto slits 5 at the light receiving side and is detected. In FIG. 3, reference numeral 4 denotes projecting means, 6 denotes an obj ect lens, 7 denotes an image forming lens, 9 denotes a slit object image, 10 denotes the first entire reflection surface of the trapezoidal prism 8, 12 denotes the second entire reflection surface as well, 13 denotes a slit real image, and 14 denotes an optical axis.

However, with the method according to Patent Document 1, when the width of the origin pattern rm is narrow, a pattern image detected by the light-receiving element 59 does not become clear due to diffusion of light or a diffraction phenomenon, and the width of the origin signal is widened. In particular, when the reflection scale 57 and the detection portion are apart from each other, there is a problem that it is difficult to obtain a sharply clear origin pattern image.

In addition, with the method according to Patent Document 2, since there is a beam splitter (half mirror 420) provided between the light projecting LED 310 and the image forming lens 410, light will attenuate in terms of light projecting (L11) and light receiving (L12), wherein there is another problem that efficient utilization of light is worse.

Also, with the method according to Patent Document 3, although efficient utilization of light is satisfactory since no beam splitter is provided, it becomes necessary to provide complicated optical components such as a trapezoidal prism, etc., and there is still another problem that it is not utilized for detection of the reflection scale.

The present invention was developed to solve the conventional problems, and it is therefore an object of the present invention to improve the detection accuracy of origin with a simple configuration without lowering the utilization efficiency of light using a beam splitter and without using any complicated optical components such as a trapezoidal prism, etc.

A first aspect of the present invention is a reflection type encoder including a reflection scale having an origin pattern formed thereon, a light source for irradiating light to the origin pattern, and a light receiving element for detecting reflection light from the origin pattern, wherein the origin pattern on the reflection scale is detected by the reflection light, and further including an incoming side origin pattern and an outgoing side origin pattern, which are formed on the reflection scale, a reflection slit disposed at the same side as the light source and the light receiving element with respect to the reflection scale, an incoming side lens that composes an incoming side telecentric optical system in which the incoming side origin pattern is made to be the object plane, and an outgoing side lens that composes the outgoing side telecentric optical system in which the outgoing side origin pattern is made to be the image forming plane, wherein a telecentric optical system is composed of the incoming side telecentric optical system and the outgoing side telecentric optical system at both sides of the reflection slit, thereby solving the problems.

Also, a secondaspect of the present inventionhas a further simplified configuration by disposing the light source, the incoming side lens, the outgoing side lens and the light-receiving element on the same substrate.

In addition, a third aspect of the present invention is such that both the incoming side lens and the outgoing side lens are made to be a cylindrical lens disposed to form an image in the measurement axis direction.

Further, a fourth aspect of the present invention is such that the incoming side lens and the outgoing side lens have the same focal distance.

Still further, a fifth aspect of the present invention has a further simplified configuration in which the incoming side lens and the outgoing side lens are integrated with each other.

Also, a sixth aspect of the present invention is such that at least either one of the incoming side lens or the outgoing side lens is made to be a Fresnel lens, and the origin detection unit is made small-sized.

In addition, a seventh aspect of the present invention is such that the origin pattern is composed of a plurality of patterns and the detection accuracy of the origin is improved.

Also, an eighth aspect of the present invention is such that a plurality of patterns are disposed to be asymmetrical with respect to the pattern center with unequal pitches.

Further, a ninth aspect of the present invention is such that a plurality of patterns are disposed to be symmetrical with respect to the pattern center.

Still further, a tenth aspect of the present invention is such that the incoming side origin pattern and the outgoing side origin pattern are integrated with each other, wherein the tolerance of the origin detection unit in the lengthwise direction of the origin pattern is widened, and the origin pattern can be disposed at high accuracy.

In addition, an eleventh aspect of the present invention is such that an incremental track is disposed between the incoming side origin pattern and the outgoing side origin pattern to be prevented from being subjected to influences due to moiré fluctuations.

Further, a twelfth aspect of the present invention is such that the reflection slit is made wide to increase the detection light quantity, wherein the SN ratio is improved, or a light source drive current is attempted to be decreased and a light source service life is attempted to be improved.

According to the present invention, it is possible to improve the detection accuracy of an origin with a simple configuration without lowering utilization efficiency of light using a beam splitter and without using any complicated optical components such as a trapezoidal prism, etc.

That is, since no beam splitter is provided in an optical path from the light source to the detection element, the detection light quantity is large. Also, since a both-sided telecentric system is composed, the tolerance in distance fluctuation between the origin detection unit and the reflection scale is wide. Furthermore, the width of the origin signal is narrow, and the origin detection can be carried out at high accuracy.

In particular, where the incoming side lens and the outgoing side lens are made to be cylindrical lenses and are integrated with each other, the number of optical components can be decreased.

Also, where a Fresnel cylindrical lens is disposed instead of the cylindrical lens, since it is a plain optical component, downsizing can be achieved.

In addition, where the origin pattern is composed of a plurality of patterns, the detection accuracy of the origin signal can be improved.

Further, where the reflection slit is widened, the detection light quantity can be increased, wherein the light source drive current is decreased, and the service life of the light source can be improved.

These and other novel features and advantages of the present invention will become apparent from the following detailed description of preferred embodiments.

The preferred embodiments will be described with reference to the drawings, wherein like elements have been denoted throughout the figures with like reference numerals, and wherein;

FIG. 1 is a view showing a detection method of origin pattern, which has been proposed in Patent Document 1;

FIG. 2 is a view showing a detection method by an image-forming lens, which has been proposed in Patent Document 2;

FIG. 3 is a view showing a detection method by a turn-down optical system, which has been proposed in Patent Document 3;

FIG. 4 is a perspective view showing the entire configuration of embodiment 1 according to the present invention;

FIG. 5 is a configurational view showing Embodiment 1 when being observed from the YZ plane;

FIG. 6 is a configurational view showing Embodiment 1 when being observed from the XZ plane;

FIG. 7 is a developed view showing an optical path with the reflection slit replaced by a transmission slit in Embodiment 1;

FIG. 8 is a developed view showing a state where the origin pattern is apart by X1 («-W) from the center of the optical axis, in order to describe operations of Embodiment 1;

FIG. 9 is a developed view showing a state where the origin pattern is apart by X2(<-W) from the center of the optical axis, in order to describe operations of Embodiment 1;

FIG. 10 is a developed view showing a state where the origin pattern is apart by X3 (= -W/2) from the center of the optical axis, in order to describe operations of Embodiment 1;

FIG. 11 is a developed view showing a state where the origin pattern is apart by X4 (= -W/4) from the center of the optical axis, in order to describe operations of Embodiment 1;

FIG. 12 is a developed view showing a state where the origin pattern is made coincident with the center (X=0) of the optical axis, in order to describe operations of Embodiment 1;

FIG. 13 is a developed view showing a state where the origin pattern is apart by X5 (= +W/4) from the center of the optical axis, in order to describe operations of Embodiment 1;

FIG. 14 is a developed view showing a state where the origin pattern is apart by X6 (= +W/2) from the center of the optical axis, in order to describe operations of Embodiment 1;

FIG. 15 is a developed view showing a state where the origin pattern is apart by X7 from the center of the optical axis, in order to describe operations of Embodiment 1;

FIG. 16 is a perspective view showing a configuration of Embodiment 2 of the present invention;

FIG. 17 is a perspective view showing a configuration of Embodiment 3 of the present invention;

FIG. 18 is a perspective view showing a configuration of Embodiment 4 of the present invention;

FIG. 19 is a developed view showing an optical path according to Embodiment 4;

FIG. 20 is a developed view showing an optical path according to Embodiment 5 of the present invention;

FIG. 21 is a perspective view showing an optical path according to Embodiment 6 of the present invention;

FIG. 22 is a perspective view showing an optical path according to Embodiment 7 of the present invention;

FIG. 23 is a perspective view showing an optical path according to Embodiment 8 of the present invention; and

FIG. 24 is a perspective view showing an optical path according to Embodiment 9 of the present invention.

With reference to the following drawings, a detailed description is given of embodiments according to the present invention.

Embodiment 1 according to the present invention includes, as shown in FIG. 4, a reflection scale 20 on which an origin track 24 consisting of an incremental (INC) track 22, an incoming side origin pattern 26 and an outgoing side origin pattern 28 is formed, an INC detection unit 30 disposed opposite to the INC track 22, and an origin detection unit 40 disposed opposite to the origin track 24.

An INC detection light source 32 for irradiating light to the INC track 22 and an INC detection element 34 for detecting reflection light from the INC track 22 are mounted in the INC detection unit 30.

The origin detection unit 40 includes an origin detection light source 42 for irradiating light to the incoming side origin pattern 26, an incoming side cylindrical lens 44 that composes an incoming side telecentric optical system in which the incoming side origin pattern 26 is made to be an object plane, a reflection slit 46 for reflecting light converged by the incoming side cylindrical lens 44, an outgoing side cylindrical lens 48 that composes an outgoing side telecentric optical system in which the outgoing side origin pattern 28 is made to be an image formingplane, and an origin detection element 50 for detecting reflection light from the outgoing side origin pattern 28.

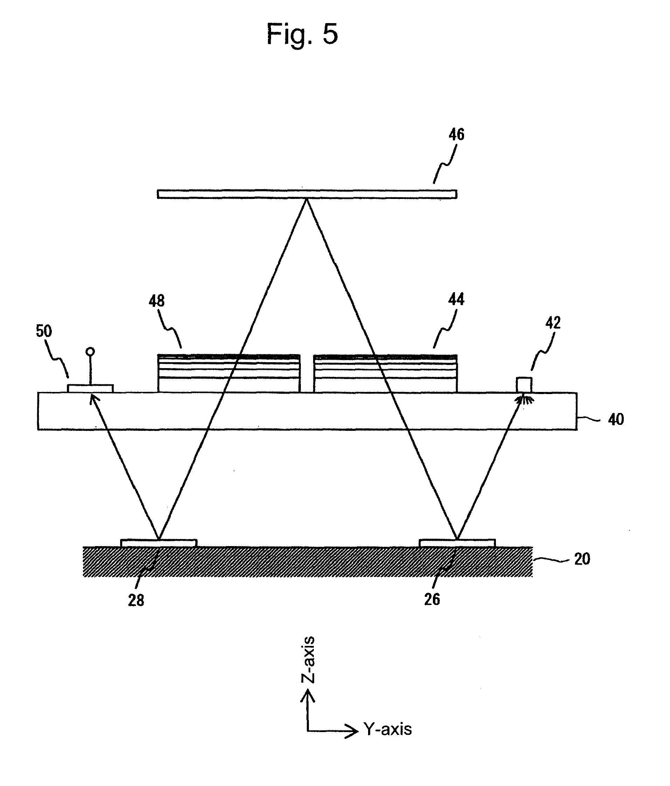

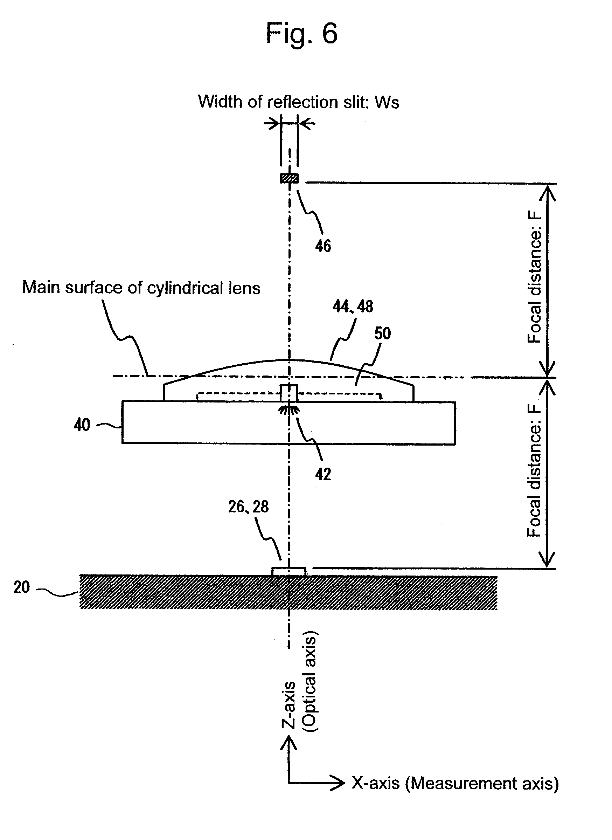

A view of an optical configuration of the origin detection unit 40, which is observed from the YZ plane, is shown in FIG. 5, and a view thereof, which is observed from the XZ plane, is shown in FIG. 6.

The origin patterns 26 and 28 are formed of chrome film formed on the reflection scale 20 consisting of, for example, glass scale. Therefore, light that reaches the origin patterns 26 and 28 is reflected.

The incoming side and outgoing side cylindrical lenses 44 and 48 are lenses having the same focal distance F and are juxtaposed in the Y-axis direction.

Herein, light emitting from the origin detection light source 42 is reflected by the incoming side origin pattern 26 on the reflection scale 20, and is reflected after reaching the reflection slit 46 through the incoming side cylindrical lens 44. And the light is reflected after reaching the outgoing side origin pattern 28 on the reflection scale 20 through the outgoing side cylindrical lens 48, and further reaches the origin detection element 50. And, the origin detection element 50 detects the reached light as the origin signal.

Also, when the reflection scale 20 moves in the direction of measurement axis (X axis), and the origin pattern does not exist immediately below the origin detection light source 42 and the origin detection element 50, since any origin pattern to be reflected is not provided, light from the light source 42 is made incident into the glass scale (20) , wherein an optical path to the origin detection element 50 is not formed.

As shown in FIG. 6, the incoming side and outgoing side cylindrical lenses 44 and 48 are disposed so that the distance from the main plane of the cylindrical lens 44 or 48 to the plane of the origin pattern 26 or 28 on the reflection scale 20 is the same as the focal distance F of the cylindrical lens, and the distance between the main plane of the cylindrical lens 44 or 48 and the reflection slit 46 becomes the same focal distance F.

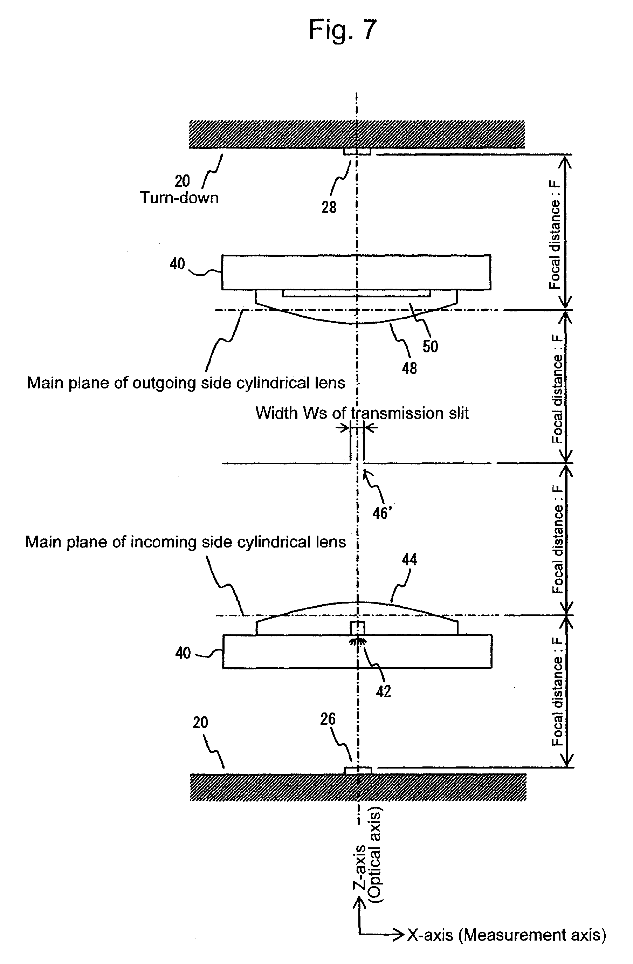

In order to make clear the configuration of the optical path, if the optical path is developed under the assumption that the transmission slit 46' that has the same width as that of the reflection slit 46 is disposed, the developed view becomes as shown in FIG. 7.

As has been made clear in FIG. 7, since each of the distance from the plane where the incoming side origin pattern 26 is provided to the main plane of the incoming side cylindrical lens 44, the distance from the main plane of the incoming side cylindrical lens 44 to the transmission slit 46' that replaced the reflection slit 46, the distance from the transmission slit 46' to the main plane of the outgoing side cylindrical lens 48, and the distance from the main plane of the outgoing side cylindrical lens 48 to the plane where the outgoing side origin pattern 28 is provided is composed of the focal distance F of the cylindrical lens 44 or 48, a both-sided telecentric optical system, the optical magnification of which is 1 time, in which the plane where the incoming side origin pattern 26 is provided is made to be the object plane and the plane where the outgoing side origin pattern 28 is provided is made to be an image-forming plane is composed.

The number of aperture NA (Numerical Aperture) of the both-sided telecentric optical system is obtained by the following expression using the focal distance F of the cylindrical lens and the slit width Ws.

$$NA = Ws/(2F) \quad . \quad . \quad . \quad . \quad . \quad (1)$$

Therefore, the depth of focus DOF of the both-sided telecentric optical system is obtained by the following expression where it is assumed that the wavelength of light from the light source 42 is $\lambda$.

$$DOF = \lambda/\{2NA\}^2\} = 2\lambda F^2/Ws^2 \quad . \quad . \quad . \quad . \quad . \quad (2)$$

Herein, where it is assumed that $\lambda$ is 660nm, F is 10mm, and Ws is 0.2mm, the DOF becomes 3.3mm.

This means that such a wide range of fluctuations in position with respect to the Z-axis direction of the reflection scale 20 where the object plane and the image-forming plane of the both-sided telecentric optical system are provided is permissible, wherein it becomes easy to assemble the reflection scale 20 and the detection portion (40).

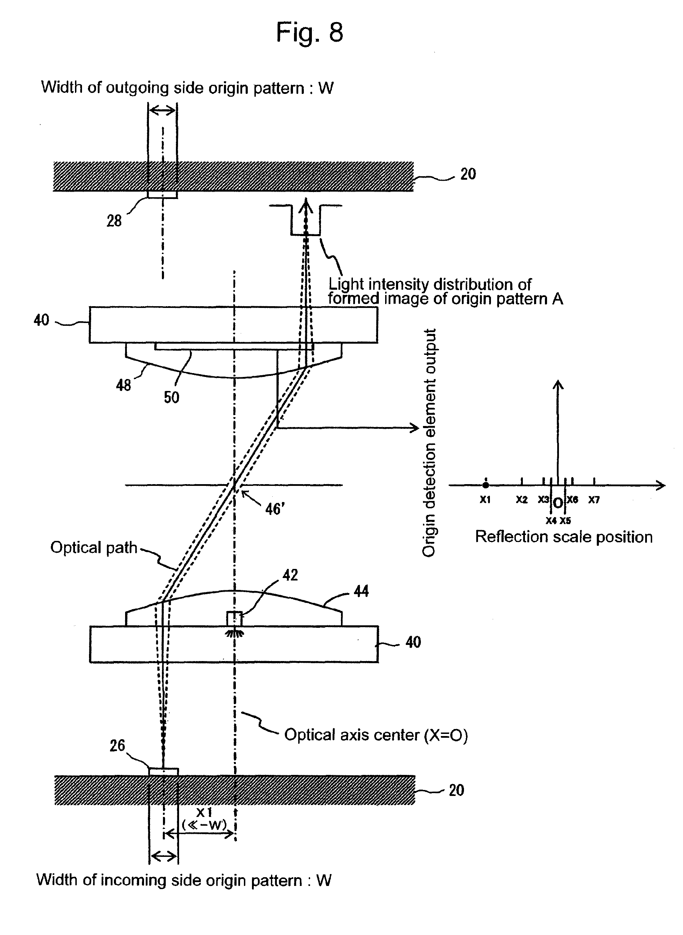

Next, with reference to FIG. 8 through FIG. 15, a detailed description is given of actions when the reflection scale 20 having the origin patterns 26 and 28 mounted thereon is moved in the direction of measurement axis.

First, as shown in FIG. 8, in a state (X=X1«-W) where the origin patterns 26 and 28 are located at this side apart by a sufficient distance X1 from the center of the optical axis in comparison with the width W thereof, an image of the incoming side origin pattern 26 is formed at an area where no outgoing side origin pattern 28 exists. Therefore, in this state, the origin detection element 50 does not detect any light from the incoming side origin pattern 26.

Herein, the area where the incoming side origin pattern 26 or the outgoing side origin pattern 28 does not exist is an area where light is made incident into the interior of a glass scale in the case of glass scale as in the present embodiment, and an area where, in the case of a metal scale, the surface is rough and light is irregularly reflected. In any case, no optical path to the origin detection element 50 is formed, wherein the origin detection element 50 does not detect any light.

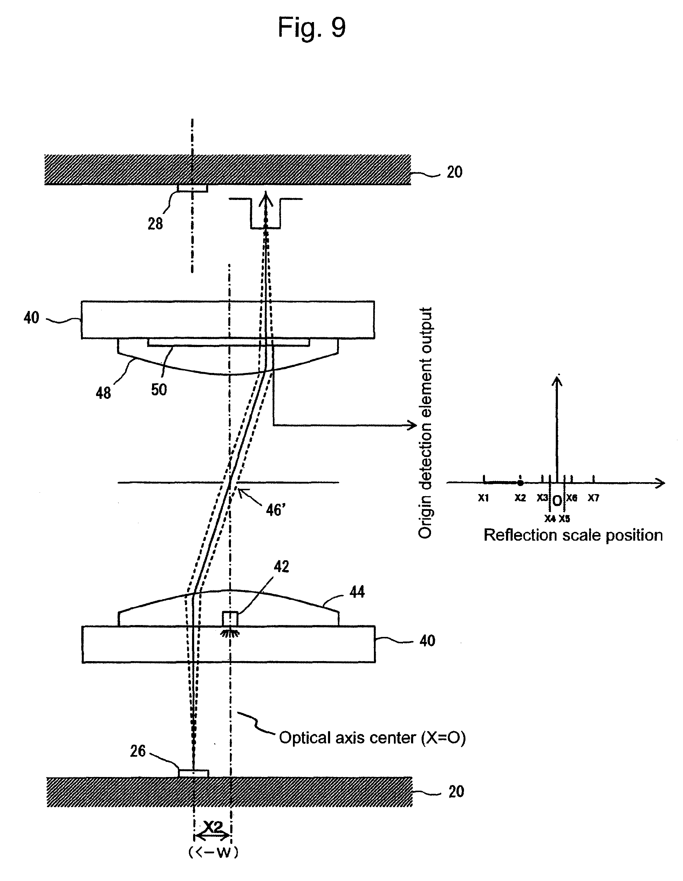

Next, as shown in FIG. 9, in a state (X = X2 < -W) where the origin patterns 26 and 28 are approached to the distance X2 from the center of the optical axis, which is greater than the width W, an image of the incoming side origin pattern 26 is formed at an area where the outgoing side origin pattern 28 does not exist as in FIG. 8. Therefore, in this state, the origin detection element 50 does not detect any light from the incoming side origin pattern 26.

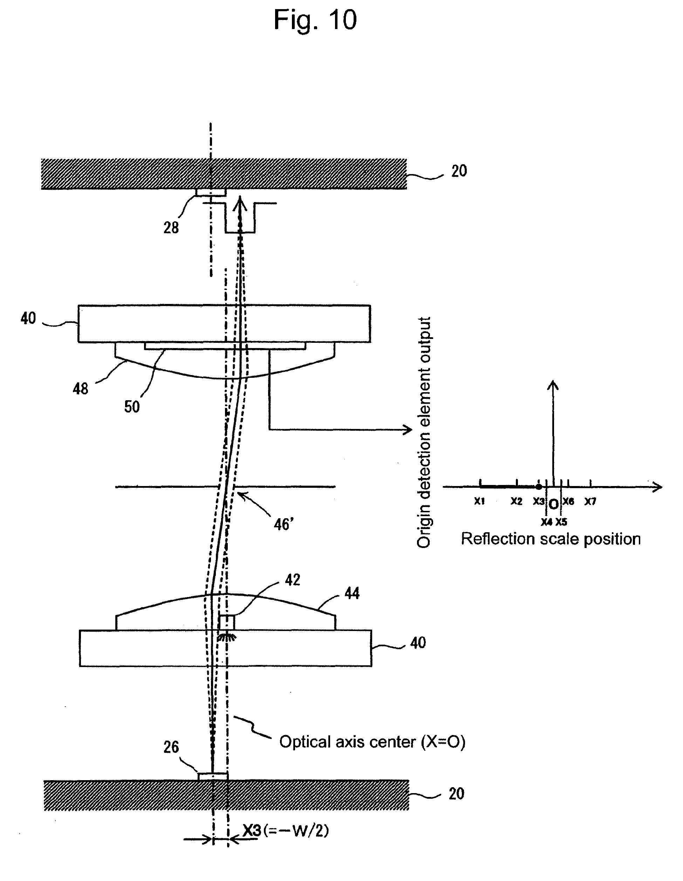

Next, as shown in FIG. 10, as the origin patterns 26 and 28 are approached to the distance X3 that is one-half the width W thereof (that is, X = X3 = -W/2), an image of the incoming side origin pattern 26 is formed aside of the outgoing side origin pattern 28. However, in this state, the origin detection element 50 does not detect light from the incoming side origin pattern 26 yet.

Next, as shown in FIG. 11, as the centerlines of the origin patterns 26 and 28 are approached to the center of the optical axis before the distance X4, which is one-fourth the width W of the origin pattern (that is, X = X4 = -W/4), an image of the incoming side origin pattern 26 is formed so as to cover half the outgoing side origin pattern 28, wherein half the image of the incoming side origin pattern 26 is reflected by the outgoing side origin pattern 28 and is detected by the origin detection element 50.

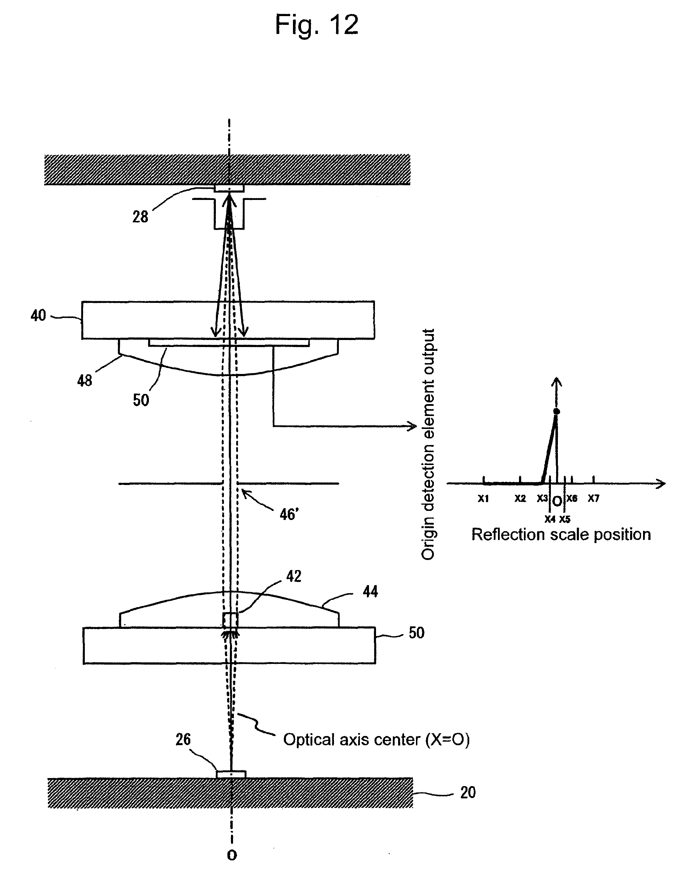

Next, as shown in FIG. 12, as the origin patterns 26 and 28 are further approached to the center of optical axis and the centerlines of the origin patterns 26 and 28 are made coincident with the center of the optical axis (X=0), the entire image of the incoming side origin pattern 26 is formed at the outside origin pattern 28, and the entire image of the incoming side origin pattern 26 is reflected by the outgoing side origin pattern 28 and are detected by the origin detection element 50. At this time, the origin detection element 50 is entered into its maximum output.

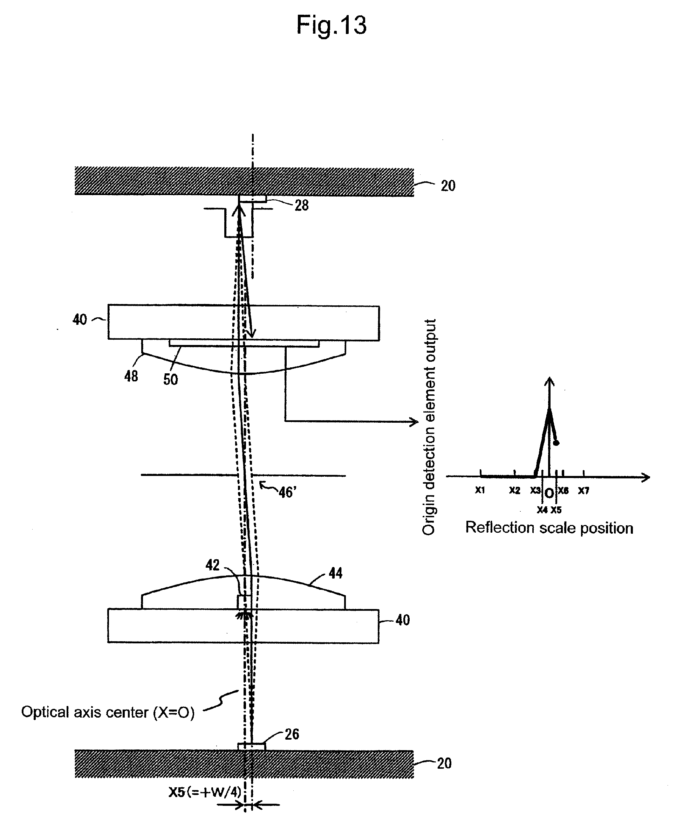

Next, as shown in FIG. 13, as the centerlines of the origin patterns 26 and 28 overrun by the distance X5, which is one-fourth the width W of the origin patterns, beyond the center of optical axis (that is, X = X5 = +W/4), an image of the incoming side origin pattern 26 is formed so as to cover half the outgoing side origin pattern 28, and half of the image of the incoming side origin pattern 26 is reflected by the outgoing side origin pattern 28 and is detected by the origin detection element 50.

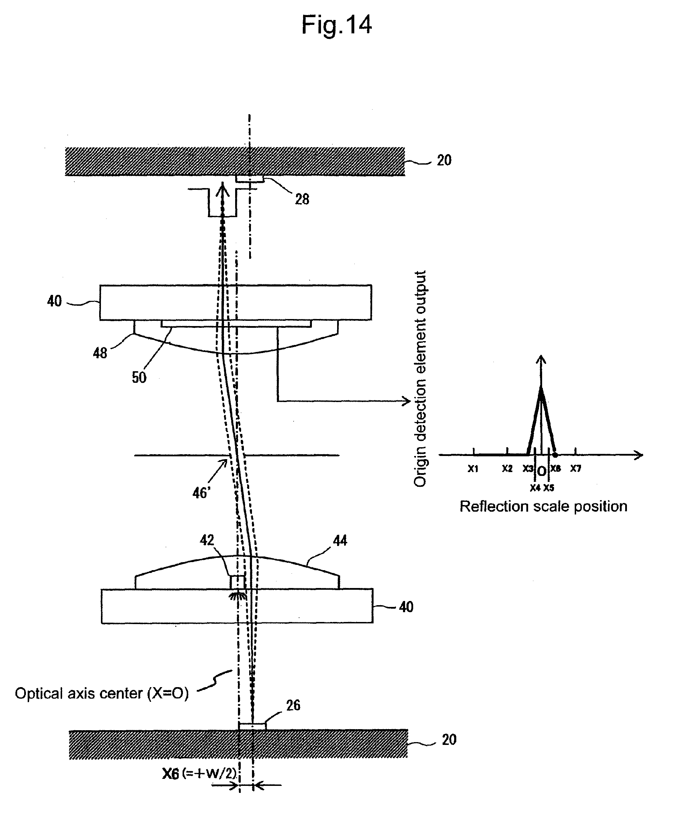

As the reflection scale 20 further advances, and, as shown in FIG. 14, the centerlines of the origin patterns 26 and 28 overrun by the distance X6, which is half the width W of the origin patterns, from the center of optical axis (that is, X = X6 = +W/2), an image of the incoming side origin pattern 26 is formed aside of the outgoing side origin pattern 28. Therefore, in this state, the origin detection element 50 will not detect light from the incoming side origin pattern 26.

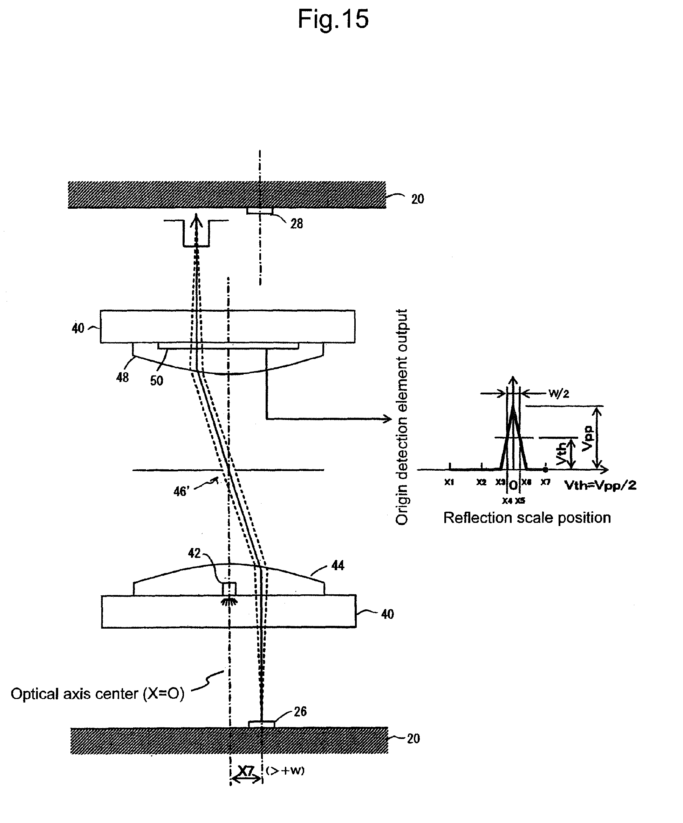

As the reflection scale 20 still further advances, and, as shown in FIG. 15, an image of the incoming side origin pattern 26 will be formed at an area where the outgoing side origin pattern 28 does not exist as in FIG. 6. Therefore, in this state, the origin detection element 50 does not detect any light from the incoming side origin pattern 26.

By the above-described actions, the origin detection element 50 outputs the maximum signal when the origin patterns 26 and 28 are coincident with the optical axis. Where it is assumed that the maximum output when coincident is Vpp and the half level thereof is Vth, it is possible to obtain an origin signal of half the width W/2 of the origin pattern from the output of the origin detection element 50.

This is advantageous in view of detecting the origin at high accuracy because the origin width of the origin signal based on detection by the image-forming lens shown in FIG. 2 is 1/2 in regard to the origin pattern width being W since the width at one side does not change.

In the present embodiment, since the origin detection light source 32, the incoming side cylindrical lens 44, the outgoing side cylindrical lens 48, and the origin detection element 50 are disposed on the same substrate, assembling and adjustment thereof are facilitated.

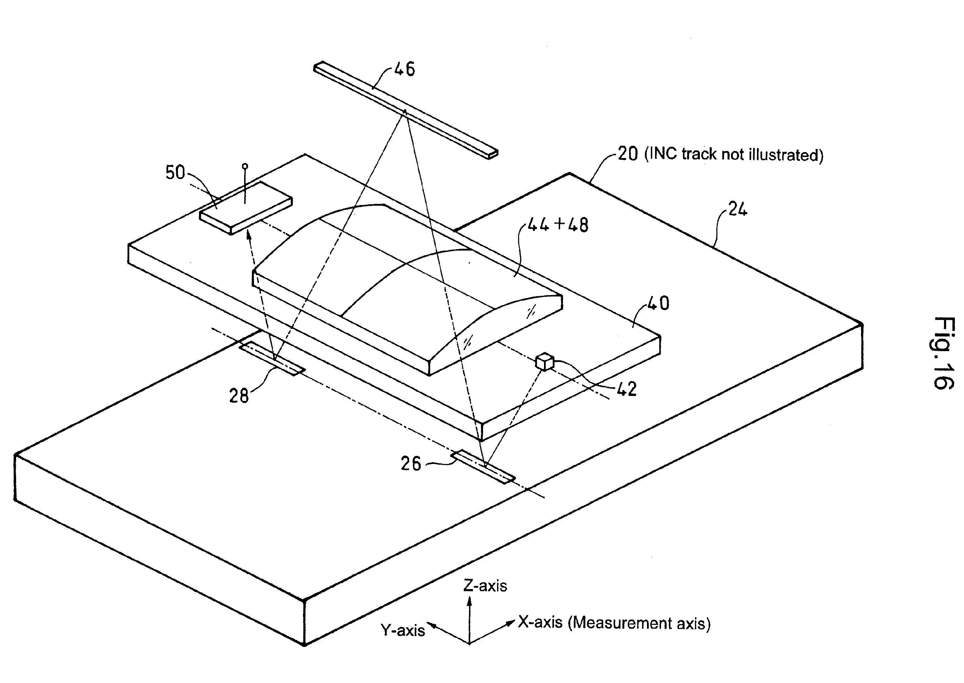

Also, in the present embodiment, although the incoming side cylindrical lens 44 and the outgoing side cylindrical lens 48 are separately provided, both may be integrated with each other as in Embodiment 2 shown in FIG. 16 (illustration of the INC track and INC detection unit is omitted).

According to Embodiment 2, since the number of optical components can be decreased, assembling thereof can be facilitated.

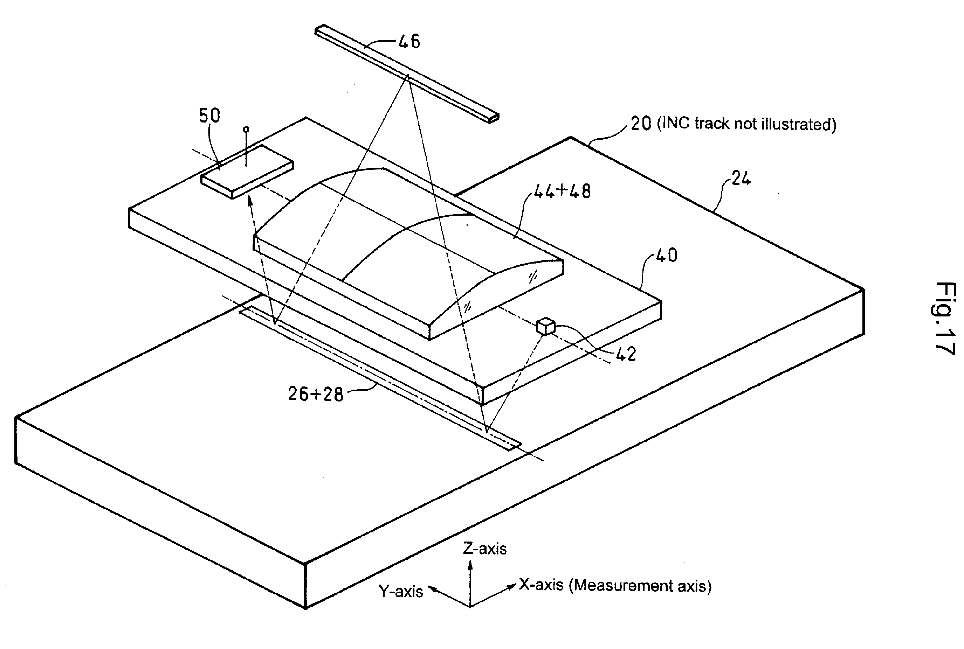

In addition, as in Embodiment 3 shown in FIG. 17, it is possible that the incoming side origin pattern 26 and the outgoing side origin pattern 28 are coupled together and integrated with each other. In this case, it is possible to widen a permissible range of the deposing position of the origin detection unit 40 in the Y-axis direction. Furthermore, it becomes hard for the incoming side origin pattern 26 and the outgoing side origin pattern 28 to deviate in regard to their position, wherein the origin patterns can be disposed at high accuracy.

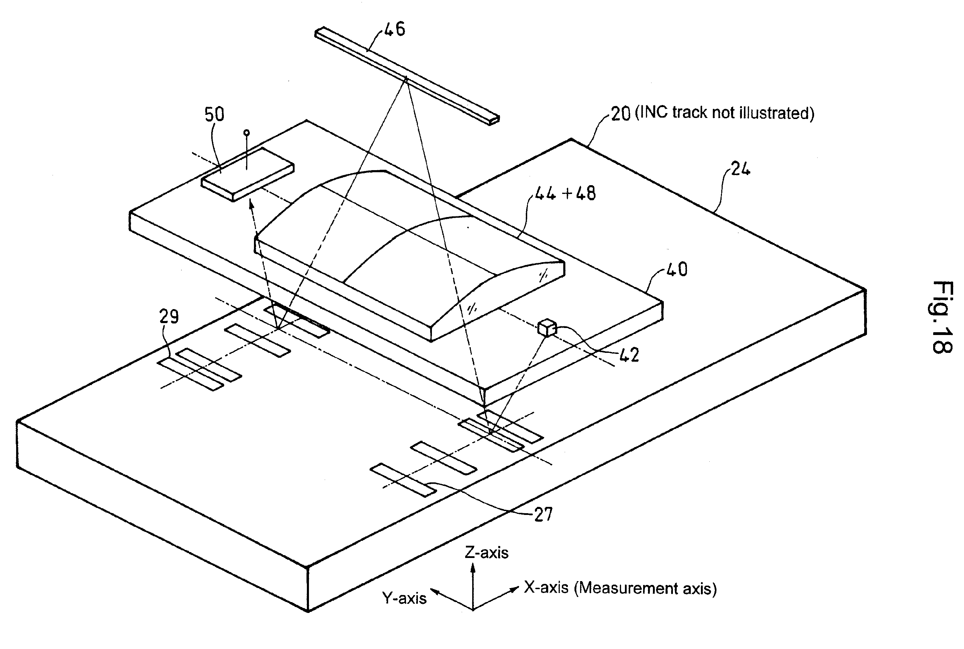

In any one of Embodiments 1 through 3, although the origin patterns are made by a single pattern line, a group of origin patterns 27 and 29 each consisting of a plurality of pattern lines may be provided instead of a single origin pattern as in Embodiment 4 shown in FIG. 18.

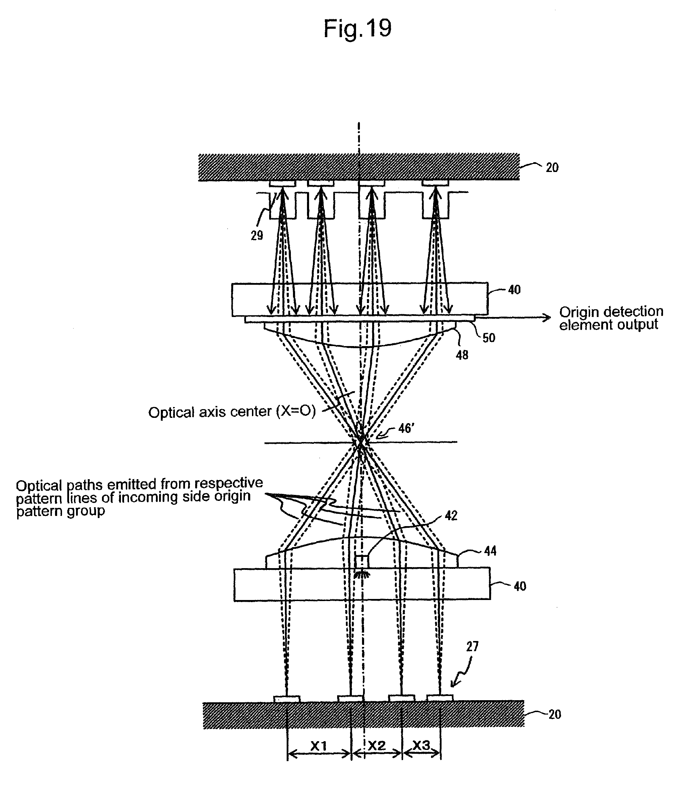

Here, where a plurality of pattern lines are disposed left-right asymmetrically at unequal pitches, it is necessary to reverse the direction of the measurement axis of the incoming side origin pattern group 27 and the outgoing side origin pattern group 29 as shown in detail in a developed view of FIG. 19.

In the present embodiment, since the origin pattern group composed of a plurality of pattern lines is detected, the accuracy of detecting the origin can be improved.

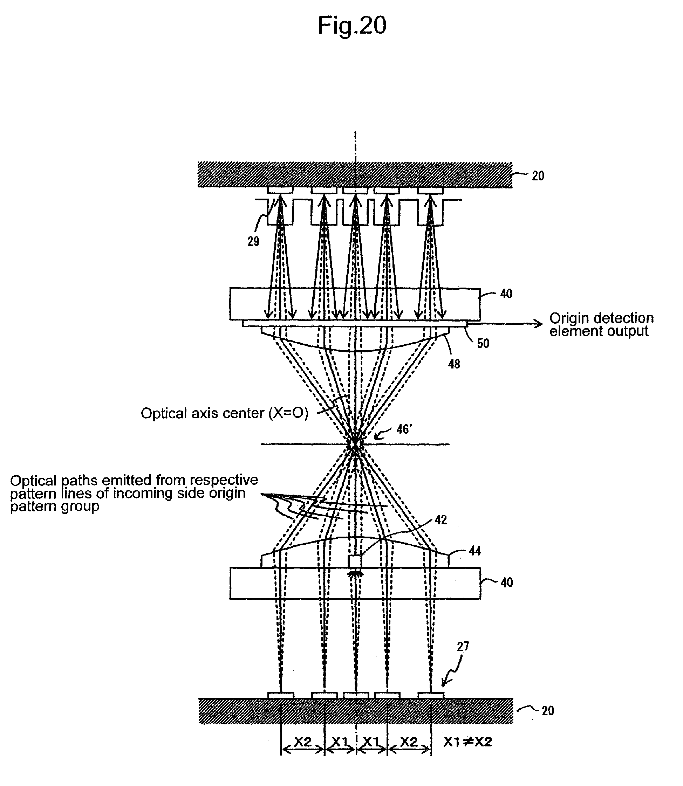

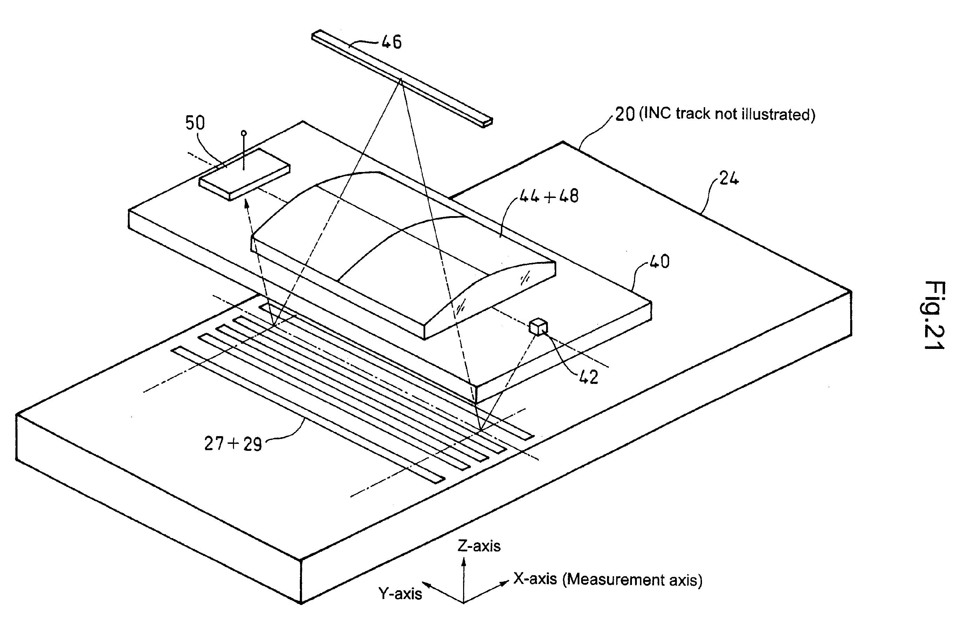

On the other hand, where the pattern lines of the incoming side origin pattern group 27 and the outgoing side origin pattern group 29 are disposed left-right symmetrically with respect to the center of the pattern as in Embodiment 5 the developed view of which is shown in FIG. 20, the incoming side origin pattern group 27 and the outgoing side origin pattern group 29 are made into the same pattern in the direction of measurement axis, and, as in Embodiment 6 shown in FIG. 21, the respective pattern lines of the incoming side origin pattern group 27 and the outgoing side origin pattern group 29 coupled together and integrated with each other.

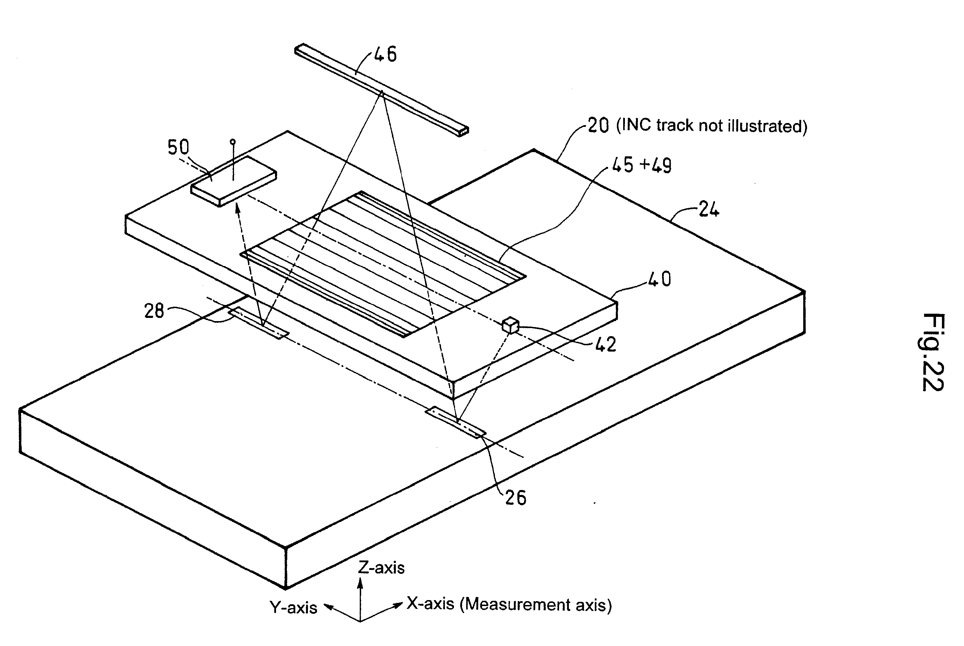

Also, although, in any one of the above embodiments, normal cylindrical lenses are used, Fresnel cylindrical lenses 45 and 49 may be disposed instead of the cylindrical lenses, as in Embodiment 7 shown in FIG. 22.

According to this embodiment, since planar optical elements may be disposed on the origin detection unit 40, downsizing and ease in assembling can be achieved.

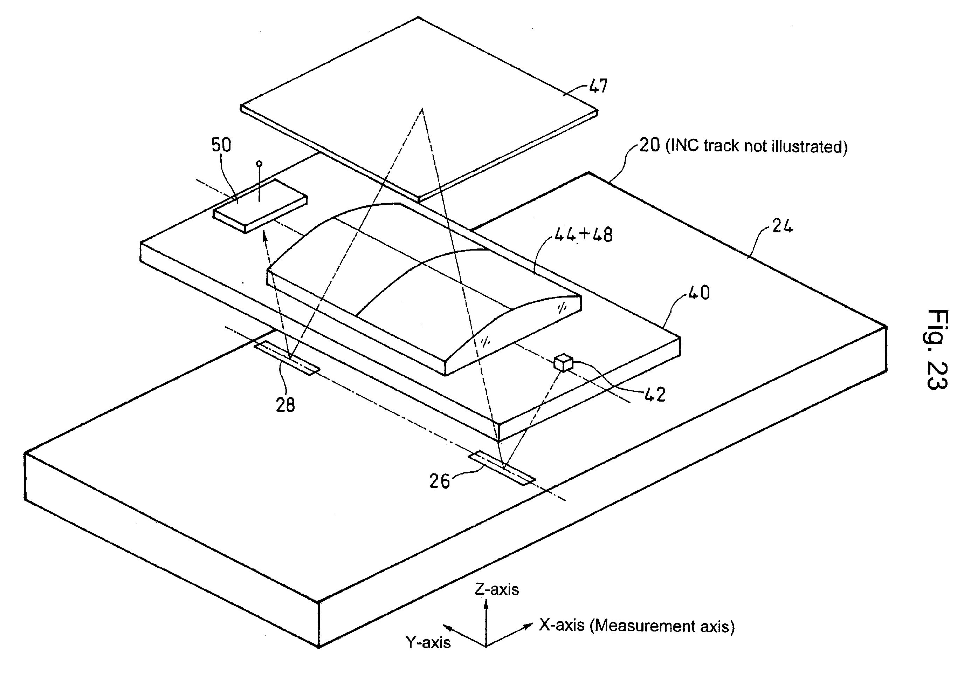

In addition, although, in any one of the above embodiments, the width Ws of the reflection slit 46 is narrowed to increase the DOF calculated by the expression (2), a wide reflection slit 47 the slit width Ws of which is widened may be used as in Embodiment 8 shown in FIG. 23 where a small DOF is sufficient with a large DOF not required.

According to the embodiments, since the light quantity detected by the origin detection element 50 can be increased, the SN ratio can be improved, or the light source drive current may be decreased, and the service life of the light source can be lengthened.

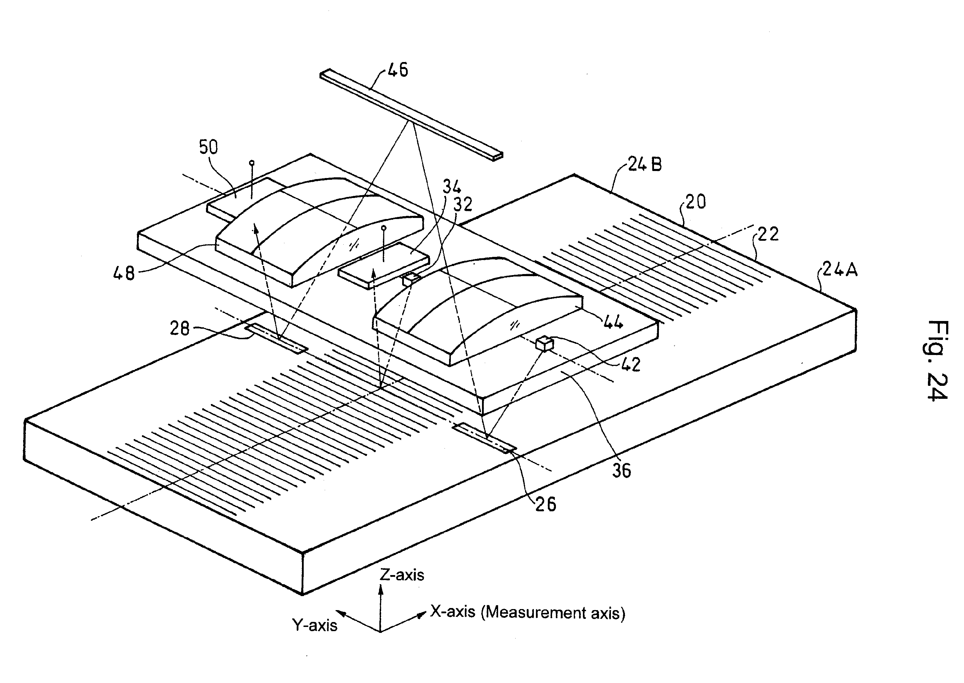

Further, although, in any one of the above embodiments, the origin track 24 is disposed at one side of the INC track 22, the origin track 24 may be separated to the incoming side origin track 24A composed of the incoming side origin pattern 26 and to the outgoing side origin track 24B composed of the outgoing side origin pattern 28 on the reflection scale 20 as in Embodiment 9 shown in FIG. 24, and is disposed at both sides of the INC track 22. In line therewith, the origin detection light source 42 and the incoming side cylindrical lens 44, and the outgoing side cylindrical lens 48 and the origin detection element 50 are disposed on the integrated INC/origin detection unit 36 in a state where the INC detection light source 32 and the INC detection element 34 are placed therebetween.

According to the embodiments, the origin does not deviate even if moiré is subjected to fluctuation, and the origin signal is not lowered.

## Claims

1.   A reflection type encoder including:

a reflection scale having an origin pattern formed thereon;
a light source for irradiating light to the origin pattern; and
a light receiving element for detecting reflection light from the origin pattern, in which the origin pattern on the reflection scale is detected by the reflection light, the same reflection type encoder further including:

an incoming side origin pattern and an outgoing side origin pattern, which are formed on the reflection scale;
a reflection slit disposed at the same side as the light source and the light receiving element with respect to the reflection scale; an incoming side lens that composes an incoming side telecentric optical system in which the incoming side origin pattern is made to be the object plane; and
an outgoing side telecentric optical system in which the outgoing side origin pattern is made to be the image forming plane, wherein a telecentric optical system is composed of the incoming side telecentric optical system and the outgoing side telecentric optical system at both sides of the reflection slit.

2.   The reflection type encoder according to Claim 1, wherein the light source, the incoming side lens, the outgoing side lens and the light receiving element are disposed on the same substrate.

3.   The reflection type encoder according to Claim 1 or 2, wherein both the incoming side lens and the outgoing side lens are cylindrical lenses disposed to form an image in the direction of measurement axis.

4.   The reflection type encoder according to any one of Claims 1 through 3, wherein the incoming side lens and the outgoing side have the same focal distance.

5.   The reflection type encoder according to Claim 4, wherein the incoming side lens and the outgoing side lens are integrated with each other.

6. The reflection type encoder according to any one of Claims 1 through 5, wherein at least either one of the incoming side lens or the outgoing side lens is made to be a Fresnel lens.

7. The reflection type encoder according to any one of Claims 1 through 6, wherein the origin pattern is composed of a plurality of patterns.

8. The reflection type encoder according to Claim 7, wherein a plurality of patterns are disposed to be asymmetrical with respect to the pattern center with unequal pitches.

9. The reflection type encoder according to Claim 7, wherein a plurality of patterns are disposed to be symmetrical with respect to the pattern center.

10. The reflection type encoder according to any one of Claims 1 through 9, wherein the incoming side origin pattern and the outgoing side origin pattern are integrated with each other.

11. The reflection type encoder according to any one of Claims 1 through 9, wherein an incremental track is disposed between the incoming side origin pattern and the outgoing side origin pattern.

12. The reflection type encoder according to any one of Claims 1 through 11, wherein the reflection slit is made wide.

# Fig. 1

## PRIOR ART

# Fig. 2

# Fig. 3

## PRIOR ART

Fig. 4

# Fig. 5

# Fig. 6

Width of reflection slit: Ws

Main surface of cylindrical lens

Focal distance: F

Focal distance: F

44, 48

50

46

40

42

26, 28

20

Z-axis (Optical axis)

X-axis (Measurement axis)

# Fig. 7

20
Turn-down

28

40

50

48

Main plane of outgoing side cylindrical lens

Width Ws of transmission slit

46'

Main plane of incoming side cylindrical lens

44

40

42

20

26

Z-axis (Optical axis)

X-axis (Measurement axis)

Focal distance : F

Focal distance : F

Focal distance : F

Focal distance : F

# Fig. 8

Width of outgoing side origin pattern : W

20

28

40

48  50

Light intensity distribution of formed image of origin pattern A

46'

Optical path

42  44

40

Optical axis center (X=O)

26

20

X1
(≪−W)

Origin detection element output

X1  X2  X3  O  X6  X7
X4 X5

Reflection scale position

Width of incoming side origin pattern : W

# Fig. 9

20

28

40

48    50

46'

42

44

40

Origin detection element output

X1    X2    X3  O X6    X7
            X4 X5

Reflection scale position

Optical axis center (X=O)

26

20

X2
(<−W)

# Fig. 10

20

28

40

48

50

46'

42

44

40

26

Optical axis center (X=O)

X3 (=−W/2)

Origin detection element output

Reflection scale position

X1    X2    X3   O   X6   X7
X4  X5

# Fig. 11

# Fig. 12

# Fig.13

# Fig.14

Origin detection element output

Reflection scale position

X1　X2　X3　O　X6　X7
X4 X5

40

48

50

46'

42　　44

40

Optical axis center (X=O)

26

X6 (=+w/2)

20

28

20

# Fig.15

Optical axis center (X=O)

Origin detection element output

Reflection scale position

Vth=Vpp/2

# Fig.16

# Fig.17

20 (INC track not illustrated)

24

40

44+48

42

46

26+28

50

Z-axis

Y-axis

X-axis (Measurement axis)

# Fig.18

# Fig.19

→ Origin detection
element output

Optical axis center (X=0)

Optical paths emitted from respective
pattern lines of incoming side origin
pattern group

# Fig.20

Origin detection
element output

Optical axis center (X=O)

Optical paths emitted from respective
pattern lines of incoming side origin
pattern group

X2   X1  X1   X2     X1≠X2

# Fig.21

20 (INC track not illustrated)

24

40

42

44 + 48

46

50

27 + 29

X-axis (Measurement axis)

Z-axis

Y-axis

# Fig.22

20 (INC track not illustrated)

45 + 49

24

40

42

46

26

50

28

Z-axis

Y-axis

X-axis (Measurement axis)

# Fig. 23

20 (INC track not illustrated)

24

40

42

44 + 48

47

26

28

50

X-axis (Measurement axis)

Z-axis

Y-axis

# Fig. 24

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004520591 A
- JP 2005017023 A
- JP HEI8184465 B